# EUROPÄISCHE PATENTANMELDUNG

(11) **EP 0 656 251 A1**
(43) Veröffentlichungstag der Anmeldung: **07.06.1995**
(21) Anmeldenummer: 93119582.0
(22) Anmeldetag: 04.12.1993
(51) Int. Cl.: B29C 45/57

(54) **Verfahren und Vorrichtung zum Herstellen von Gegenständen aus thermoplastischem Kunststoff durch Spritzgiessen**

(71) Anmelder: KRUPP CORPOPLAST MASCHINENBAU GmbH, D-45143 Essen (DE)
(72) Erfinder: Schramm, Klaus, D-64342 Seeheim-Jugenheim (DE); Blank, Michael,, D-42113 Wuppertal (DE)
(74) Vertreter: Koepsell, Helmut, Dipl.-Ing.

(57) **Zusammenfassung**

Die Erfindung betrifft ein Verfahren und eine Vorrichtung zum Herstellen von Gegenständen aus thermoplastischem Kunststoff durch Spritzgießen unter Verwendung eines mit einer Schnecke versehenen Extruders (10) und einer Spritzgießform (28). Dabei wird zunächst das in einem ersten Speicherraum (17) gespeicherte Material in Richtung auf die Spritzgießform (28) zum Füllen derselben bewegt und nach dem Füllen der Spritzgießform auf das in letzterer befindliche thermoplastische Material ein Nachdruck zur Kompensation von bei der Abkühlung auftretenden Materialschwindungen aufrechterhalten unter Verwendung wenigstens eines zweiten Speicherraumes (30), aus welchem ein Kolben (32) thermoplastischem Kunststoff in Richtung auf die Spritzgießform (28) zu verdrängen sucht. Das Volumen des zweiten Speicherraums (30) kann während des Entleerens des ersten Speicherraums (17) durch entsprechendes Verschieben des zweiten Speicherraums (30) zugeordneten Kolbens (32) verändert werden, um das Füllen der Spritzgießform mit einer Geschwindigkeit ablaufen zu lassen, die unabhängig ist von der Geschwindigkeit, mit welcher der erste Speicherraum (17) entleert wird.

## Beschreibung

Die Erfindung betrifft ein Verfahren und eine Vorrichtung zum Herstellen von Gegenständen aus thermoplastischem Kunststoff durch Spritzgießen gemäß dem Oberbegriff des Anspruches 1 bzw. dem des Anspruches 16.

Die US-PS 4,256,869 offenbart ein Verfahren und eine Vorrichtung der vorstehend angegebenen Art, bei welchen der zweite Speicherraum, der innerhalb der Spritzgießform angeordnet ist, während des Einspritzvorganges ganz oder teilweise mit Kunststoff gefüllt wird. Diesem zweiten Speicherraum, der ein merklich geringeres Volumen als der erste Speicherraum aufweist, ist ein Kolben zugeordnet, der unter der Einwirkung eines Federmittels steht, welches durch den während des Füllens des zweiten Speicherraumes verdrängtem Kolben gespannt wird. Nach Beendigung des durch das Verschieben der Schnecke bewirkten Füllens der Kavitäten der Spritzgießform wird die Verbindung zwischen letzterer und dem Extruder unterbrochen, wobei dann der Nachdruck durch den dem zweiten Speicherraum zugeordneten, unter Federdruck stehenden Kolben bewirkt wird. Eine Bewegung des Kolbens unabhängig von dessen Verdrängung durch das durch die Schnecke bewegte Material bzw. unabhängig von der Beaufschlagung durch das Federmittel ist nicht möglich. Somit ist es unvermeidlich, daß die Verweilzeit des Materials im zweiten Speicherraum unkontrollierbar ist und somit keine Gewähr dafür besteht, daß alle Materialteile aus dem zweiten Speicherraum ausgestoßen werden, bevor sie Änderungen erfahren, die die Qualität des Fertigerzeugnisses negativ beeinflussen. - In einer zweiten durch die US-PS 4,256,689 offenbarten Ausführungsform ist der außerhalb der Spritzgießform am Mundstück der Plastifiziereinheit angeordnete zweite Speicherraum als Zylinder ausgebildet, dessen Kolben durch ein pneumatisches oder hydraulisches Druckmittel beaufschlagbar ist, ohne daß hierbei Antriebsmittel vorgesehen wären, die ein Bewegen des Kolbens unabhängig von der Beaufschlagung durch den Kunststoff oder das Druckmedium, beispielsweise nach einem bestimmten Programm, ermöglichte. - Schließlich offenbart die US-PS 4,256,689 eine Ausführungsform, bei welcher innerhalb der Spritzgießform ein zweiter, zylindrischer Speicherraum vogesehen ist, mit dem die Düse des Plastifizieraggregates als Kolben zusammenwirkt. Dabei wird so verfahren, daß zunächst der zweite Speicherraum gefüllt und nach Beendigung dieses Füllvorganges Material durch eine entsprechende Hubbewegung der Schnecke aus dem ersten Speicher in Richtung auf die Spritzgießform bewegt wird. Gleichzeitig wird die Plastifiziereinrichtung in Richtung auf die Spritzgießform verschoben, wodurch auch das im zweiten Speicherraum befindliche Material in Richtung auf die Spritzgießform bewegt wird. D.h., daß hierbei bezüglich beider Speicherräume ein Entleerungsvorgang erfolgt. Nach Beendigung des Füllens der Spritzgießform wird der zweite Speicherraum durch weiteres Verschieben der Schnecke erneut gefüllt. Nach Verschließen der Verbindung zwischen diesem zweiten Speicherraum und dem eigentlichen Extruder erfolgt das Nachdrücken durch entsprechende Beaufschlagung der als Kolben mit dem zweiten Speicherraum zusammenwirkenden Düse des Plastifizieraggregates. Diese Verfahrensweise hat den Nachteil, daß zumindest in der Anfangsphase des Einspritzvorganges das Füllen der Kavitäten der Spritzgießform immer mit großer Geschwindigkeit erfolgt, da beide Speicher gleichzeitig entleert werden. Außerdem ist nachteilig, daß das Wiederauffüllen des zweiten Speicherraums zusätzlich Zeit beansprucht, so daß insgesamt der Arbeitszyklus länger dauert. Eine Betätigung des dem zweiten Speicherraum zugeordneten Kolbens unabhängig von der Antriebseinrichtung, die die Plastifiziereinrichtung in ihrer Gesamtheit gegenüber der Spritzgießform bewegt, ist weder vorgesehen noch möglich. Die US-PS 4,256,689 enthält auch keinerlei Angaben darüber, ob das gleichzeitige Entleeren beider Speicherräume während des Füllens der Spritzgießform aufeinander abgestimmt sein sollte. Die einzige aus dem Ofenbarungsgehalt der US-PS möglicherweise herleitbare Schlußfolgerung ist die, daß das Volumen des aus dem ersten Speicherraum in Richtung auf die Spritzgießform verdrängten Materials der Volumendifferenz zwischen dem zweiten Speicherraum und dem Materialvoluzmen entspricht, welches für das Füllen der Kavitäten der Spritzgießform erforderlich ist.

Die DE-OS 3,307,586 offenbart ebenfalls ein Verfahren und eine Vorrichtung zum Spritzgießen von Kunststoffteilen unter Verwendung eines mit einer Schnecke versehenen Extruders mit Düsenkopf und einer Spritzgießform, bei welchem zunächst durch axiales Verschieben der Schnecke des Extruders das in einem ersten Speicherraum gspeicherte Material in Richtung auf die Spritzgießform zum Füllen derselben bewegt wird und nach diesem Einspritzvorgang auf das in der Spritzgießform befindliche thermoplastische Material ein Nachdruck aufrechterhalten bleibt unter Verwendung eines Kolbens, der aus einem mit dem Verbindungskanal zwischen Extruder und Spritzgießform verbundenen zweiten Speicherraum das darin befindliche thermoplastische Material in Richtung auf die Spritzgießform zu verdrängen sucht. Der zweite Speicherraum ist dabei an dem Düsenteil der Plastifiziereinrichtung angebracht. Ihm ist ein Kolben zugeordnet, der durch eine besondere Antriebseinrichtung beaufschlagt werden kann, um das Material aus dem zweiten Speicherraum in Richtung auf die Spritzgießform zu verdrängen. Eine Beaufschlagung des Kolbens erfolgt zum Zwecke der vollständigen Entleerung zu Beginn des Einspritzvorganges, also des Entleerungshubes der Schnecke, und nach Beendigung des Einspritzvorgangs, um den Nachdruck aufrechtzuerhalten. In der zweiten Phase des Einspritzvorgangs wird der zweite Speicherraum unter Verdrängung des ihm zugeordneten Kolbens gefüllt, damit Material für die an den Einspritzvorgang anschließende Nachdruckphase zur Verfügung steht. Eine Vergrößerung oder Verkleinerung des zweiten Speicherraumes durch entsprechendes Verschieben des ihm zugeordneten Kolbens zum Zweck der Beeinflussung der Füllgeschwindigkeit und/oder des Fülldruckes innerhalb des Spritzgießwerkzeuges ist nicht vorgesehen.

Bei den bekannten Verfahren und Vorrichtungen zum Herstellen von Gegenständen aus thermoplastischem Kunststoff durch Spritzgießen erfolgt die Steuerung des Stroms der Kunststoffschmelze bezüglich Geschwindigkeits- und Druckverlauf während des Einspritzvorgangs durch den Antrieb des Einspritzkolbens der Einspritzeinrichtung der Spritzgießmaschine, wobei es unerheblich ist, ob es sich um ein Einspritzsystem unter Verwendung eines besonderen Kolbens oder um ein Einspritzsystem handelt, bei welchem die Plastifizierschnecke zum Entleeren des ersten Speichers axial verschoben wird. In beiden Fällen handelt es sich um vergleichsweise schwere Bauelemente mit großen Massen, die zudem bei ihren Bewegungen erheblichen Reibungen unterliegen und somit spontanen Steuerbefehlen zur Steuerung des Schmelzestromes nur ungenügend folgen können.

In Anbetracht der ständig steigenden Anforderungen an die Qualität der durch Spritzgießen hergestellten Gegenstände ist es jedoch erforderlich, im Bedarfsfall eine präzise Beeinflussung des Verlaufs von Druck und/oder Fließgeschwindigkeit während des Füllens der Kavitäten innerhalb der Spritzgießform durchzuführen. Insbesondere soll es möglich sein, die während der einzelnen Phasen des Füllvorganges unter Umständen durchaus unterschiedlichen Erfordernisse an Druck und/oder Geschwindigkeit der Schmelze zu berücksichtigen.

Eine Steuerung des Stroms der Kunststoffschmelze in die Kavitäten hinein durch entsprechende Beeinflussung der Geschwindigkeit des Einspritzkolbens der Einspritzeinrichtung begegnet erheblichen Schwierigkeiten durch die bereits erwähnte Tatsache, daß die Teile, deren Bewegungen insbesondere bezüglich deren Geschwindigkeit dazu beeinflußt werden müssten, eine sehr große Masse haben und darüber hinaus auch aufgrund der unvermeidbaren Reibungsverhältnisse bezüglich ihrer Geschwindigkeit nicht präzise genug gesteuert oder geregelt werden könnten. Hinzu kommt, daß eine Beeinflussung der Geschwindigkeit des Einspritzkolbens während der Füllphase zum Zwecke der Erzielung von die Qualität der herzustellenden Gegenstände verbessernden besonderen Druck- und/oder Geschwindigkeitsverläufe in der Spritzgießform einem Grunderfordernis zuwiderliefe, welches zur Erzielung einer mögllichst hohen Produktivität darin besteht, die Zeit, die für den Einspritzvorgang benötigt wird, so kurz wie möglich zu halten. Dies setzt voraus, daß der Einspritzkolben bzw. die Schnecke während der Füllphase so schnell wie technisch möglich bewegt wird. Somit sieht sich der Benutzer von Spritzgießmaschinen mit zwei Bedingungen konfrontiert, nämlich der nach hoher Produktivität und jener nach guter Qualität der Erzeugnisse, die in der Mehrzahl der Fälle einander ausschließen oder zumindest nur teilweise miteinander in Einklang gebracht werden können.

Der Erfindung liegt somit unter anderem die Aufgabe zugrunde, Verfahren und Vorrichtung der einleitend beschriebenen Art so weiterzuentwickeln, daß einerseits der Einspritzkolben der Einspritzeinrichtung mit größtmöglicher Geschwindigkeit vorbewegt werden kann, um die für das Entleeren des ersten Speichers notwendige Zeit so kurz wie möglich zu halten, andererseits jedoch trotzdem der Füllvorgang innerhalb der Spritzgießform insbesondere bezüglich Druck und Fließgeschwindigkeit der Kunststoffschmelze in den Kavitäten unter Bedingungen ablaufen kann, die zu einer möglichst guten Qualität der herzustellenden Erzeugnisse führen.

Diese Aufgabe wird mit den im Kennzeichen des Anspruches 1 bzw. des Anspruches 16 angegebenen Merkmalen gelöst.

Die Erfindung gibt die Möglichkeit, den in die jeweilige Kavität der Spritzgießform eintretenden Schmelzestrom und somit den Prozeß der Bildung des in der Kavität herzustellenden Gegenstandes unabhängig von der Kolbenbewegung der Einspritzeinrichtung nach den jeweiligen Erfordernissen zumindest bezüglich Druck und Fließgeschwindigkeit zu beeinflussen, beispielsweise zu verzögern oder zu beschleunigen. So kann das Volumen des wenigstens einen zweiten Speicherraum zur Verlangsamung des Füllens der wenigstens einen Kavität in der ersten Phase des Einspritzvorganges während dieser ersten Phase eine Vergrößerung erfahren, um so die Geschwindigkeit des Schmelzestromes beim Eintreten in die Kavität zu verringern und beispielsweise die Bildung eines unerwünschten Freistrahls zu verhindern. Gegen Ende des Einspritzvorganges kann das Volumen des wenigstens einen zweiten Speicherraums dann unter entsprechender Verdrängung von thermoplastischem Kunststoff in Richtung auf die Kavitäten verringert werden, um in dieser Phase die Geschwindigkeit, mit welcher der Schmelzestrom in die Kavitäten eintritt, zu erhöhen.

Die Volumenänderungen des wenigstens einen zweiten Speicherraumes und damit die Bewegungen des diesem zugeordneten Kolbens können in Abhängigkeit von dem Weg beeinflußt werden, den der Einspritzkolben der Einspritzvorrichtung während der Entleerung des ersten Speicherraumes zurücklegt. Eine weitere Möglichkeit besteht darin, die Volumenänderungen des wenigstens einen zweiten Speicherraumes während der Entleerung des ersten Speicherraums in Abhängigkeit vom Druck und/oder der Fließgeschwindigkeit des Schmelzestromes in der Spritzgießform durchzuführen. Es ist auch möglich, die Volumenänderungen des wenigstens einen zweiten Speicherraums während der Entleerung des ersten Speicherraums nach einem bestimmten Programm ablaufen zu lassen, welches z. B. in Abhängigkeit von dem Weg abgerufen wird, den der Einspritzkolben während des Einspritzvorganges zurücklegt. Dieses Programm kann aber auch in Abhängigkeit von der Zeit abgerufen werden. Auf diese Weise ist es in jedem Falle ohne weiteres möglich, bei Verwendung einer geeigneten Steuer- oder Regeleinrichtung für den jeweiligen Anwendungsfall von Arbeitszyklus zu Arbeitszyklus genau wiederholbare Bedingungen und Verfahrensabläufe einzuhalten, die zu einem Erzeugnis von hoher Qualität führen.

Wenn die Volumenänderungen des wenigstens einen zweiten Speicherraums in Abhängigkeit von Verfahrensparametern, beispielsweise Druck, Fließgeschwindigkeit, Temperatur erfolgen, ist es zweckmäßig, im Spritzgießwerkzeug in geeigneten Stellen Sensoren für Druck und/oder Temperatur und/oder Fließgeschwindigkeit der Schmelze vorzusehen. Es können somit bei Verknüpfung der Regelkreise für Geschwindigkeit und/oder Druck und/oder Temperatur mit einer entsprechenden Regelelektronik exakte Sollwerte für Druck, Geschwindigkeit und/oder Temperatur eingehalten werden. Dies wird insbesondere dann möglich sein, wenn der jeweilige zweite Speicherraum im Spritzgießwerkzeug angeordnet ist, so daß eine festgestellte Zustandsänderung im Sinne einer Abweichung von einem Soll-Wert zu einer sofortigen Kompensation führt. Die Anordnung des mindestens einen zweiten Speicherraumes innerhalb des beheizten Bereiches des Spritzgießwerkzeuges, also normalerweise in oder am Heißkanal-Bereich, hat zudem den Vorteil, daß für die Beheizung dieses Speicherraumes keine oder nicht ins Gewicht fallende zusätzliche Maßnahmen zu treffen sind. Von Bedeutung ist ferner, daß bei Anordnung des wenigstens einen zweiten Speicherraums im ohnehin beheizten Bereich der Spritzgießform die Kunststoffmasse im zweiten Speicher unter allen im Betrieb vorkommenden Umständen im wesentlichen die gleiche Temperatur aufweist wie die übrige im Heißkanal-Bereich der Spritzgießform vorhandenen Kunststoffschmelze.

Die Größe des jeweiligen zweiten Speicherraums wird unter anderem abhängen von der Anzahl der Kavitäten, die jedem zweiten Speicherraum zugeordnet sind, und natürlich auch vom Volumen des herzustellenden Erzeugnisses. In jedem Fall kann jedoch das Volumen des wenigstens einen zweiten Speicherraumes erheblich kleiner sein als das Volumen des ersten Speicheraumes der Einspritzvorrichtung mit der Folge, daß auch der im zweiten Speicherraum geführte Kolben und damit die zu bewegenden Massen klein sind. Dabei ist es ohne weiteres möglich, zur Erzielung einer großen Auflösung dem zweiten Speicherraum und dem darin geführten Kolben einen kleinen Durchmesser zu geben, so daß der Kolben zur Erzielung eines bestimmten Effektes, also beispielsweise zur Vergrößerung des Volumens des Speicherraumes und damit einer entsprechenden Verringerung der Fließgeschwindigkeit der Kunststoffschmelze, einen entsprechend großen Weg zurückzulegen hat.

Durch die Anordnung des wenigstens einen zweiten Speicherraums im Heißkanal-Bereich der Spritzgießform wird zudem erreicht, daß die durch die Volumenänderungen des zweiten Speicherraums erzeugten Einflüsse möglichst nahe an den Kavitäten wirksam werden. In besonderen Fällen besteht so ohne weiteres die Möglichkeit, bei sehr hohen Anforderungen an die Qualität des Erzeugnisses jeder Kavität einen zweiten Speicherraum zuzuordnen.

Im übrigen kann der wenigstens eine zweite Speicherraum auch vor dem Öffnen der Spritzgießform durch entsprechende Volumenvergrößerung eine Dekompression im System zu bewirken, so daß ohne Verschlußnadeln für die den Kavitäten zugeordneten Düsenöffnungen gearbeitet werden kann. Auch hierbei ist es zweckmäßig, den wenigstens einen zweiten Speicherraum möglichst nahe an den Kavitäten anzuordnen.

Nach Beendigung der Nachdruckphase kann das in dem wenigstens einen zweiten Speicherraum noch befindliche Material zwecks Entleerung dieses zweiten Speicherraumes durch den zugeordneten Kolben in Richtung auf den ersten Speicherraum verdrängt werden, wobei dazu eine Verbindung zwischen zweitem Speicherraum und erstem Speicherraum hergestellt werden kann. Bei Vorhandensein von mehr als einem zweiten Speicherraum wird es im allgemeinen zweckmäßig sein, sämtliche zweite Speicherräume gleichzeitig zu entleeren.

Es ist aber jedenfalls dann, wenn sichergestellt ist, daß Teile der im zweiten Speicherraum vorhandenen Schmelze dort nicht in unkontrollierbarer Weise verweilen, auch möglich, auf eine vollständige Entleerung des mindestens einen zweiten Speicherraumes am Ende der Nachdruckphase zu verzichten. Dies wird insbesondere dann möglich sein, wenn während der Nachdruckphase die Volumenänderung des mindestens einen zweiten Speicherraumes nach einem bestimmten Programm erfolgt. Hierbei müßte die Position des dem zweiten Speicherraum zugeordneten Kolbens am Ende der Nachdruckphase festliegen, so daß zumindest dann, wenn auch die Volumenänderung des wenigstens einen Speicherraums während des Einspritzvorganges nach einem Programm erfolgt, der dem zweiten Speicherraum zugeordnete Kolben jeweils durch das Programm festgelegte Positionen einnimmt.

Ferner kann dann, wenn jeder Kavität ein zweiter Speicherraum mit Kolben zugeordnet ist, auch so verfahren werden, daß die Kolben in den zweiten Speicherräumen am Ende der Nachdruckphase die jeweils zugehörige Kavität verschließen, um so die in vielen Fällen üblichen nadelförmigen besonderen Verschlußelemente überflüssig zu machen. Die Verwendung der Kolben der zweiten Speicherräume als Verschlußelement für die Kavitäten setzt natürlich voraus, daß diese zweiten Speicherräume dann in Strömungsrichtung des Materials unmittelbar vor der jeweiligen Kavität angeordnet sind.

In der Zeichnung sind einige Ausführungsbeispiele der Erfindung im Schema dargestellt. Es zeigen:
- Fig. 1: einen Längsschnitt durch einen Abschnitt einer Spritzgießvorrichtung mit entleertem erstem Speicherraum und gefülltem zweiten Speicherraum, welcher im Düsenkopf des Extruders angeordnet ist,
- Fig. 2: eine der Fig. 1 entsprechende Darstellung einer zweiten Ausführungsform, bei welcher der zweite Speicherraum jedoch im Heißkanal-Bereich der Spritzgießform angeordnet ist,
- Fig. 3: einen Schnitt nach der Linie III-III in Fig. 4 durch den Heißkanal-Bereich eines Spritzgießwerkzeugs mit zwei am Heißkanal-Bereich angeordneten zweiten Speicherräumen,
- Fig. 4: einen Schnitt nach der Linie IV-IV der Fig. 3, wobei jedoch nur der Heißkanal-Bereich mit den Düsen dargestellt ist,
- Fig. 5: eine der Fig. 3 entsprechende Darstellung einer weiteren Ausführungsform, bei welchem dem Heißkanal-Bereich der Spritzgießform sechs zweite Speicherräume zugeordnet sind,
- Fig. 6: einen Schnitt gemäß der Linie VI-VI der Fig. 5 in einer der Fig. 4 entsprechenden Darstellung,
- Fig. 7: die Draufsicht einer mehrteiligen Spritzgießform, bei welcher ein Heißkanal-Bereich mit zwei zu beiden Seiten desselben angeordneten, die Kavitäten enthaltenden Formbereichen zusammenwirkt,
- Fig. 8: ein Diagramm, welches eine bevorzugte Folge von Funktionen während eines Arbeitszyklus zeigt,
- Fig. 9: ein Blockschaltbild eines Regelkreises für den Antrieb des dem wenigstens einen zweiten Speicherraums zugeordneten Kolbens.

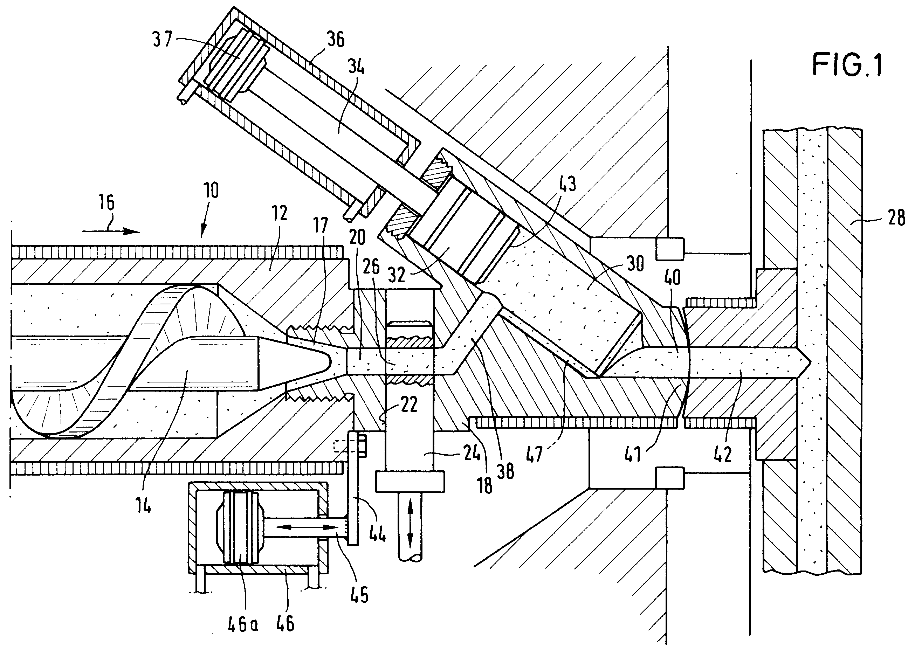

Sämtliche in der Zeichnung dargestellten Ausführungsbeispiele weisen einen Extruder und eine Spritzgießform auf, wobei im allgemeinen, wie im Falle der Ausführungsform gemäß Fig. 1, der Extruder 10 in üblicher Weise ausgebildet und mit einem Gehäuse 12 versehen ist, innerhalb dessen die Schnecke 14 drehbar und axial verschiebbar angeordnet ist. Das im Extruder unter Einwirkung von Wärme und Drehbewegung der Schnecke 14 plastifizierte Kunststoffmaterial wird dabei in Richtung des Pfeiles 16 transportiert, wobei das durch die Schnecke transportierte thermoplastische Material einen ersten Speicherraum 17 füllt und dabei die Schnecke 14 entgegen der Richtung des Pfeiles 16 zurückschiebt. So wird das plastifizierte Material als Schmelze zunächst im ersten Speicherraum 17 gesammelt, wobei das Volumen dieser gesammelten Schmelze im wesentlichen dem Volumen entspricht, welches erforderlich ist, um die Kavitäten der Spritzgießform zur Bildung der jeweils herzustellenden Artikel zu füllen. An den Extruder 10 schließt sich ein Düsenkopf 18 an, der mit einem axialen Durchgang 20 für das thermoplastische Material versehen ist. Innerhalb einer Bohrung 22 im Düsenkopf 18 ist ein darin geführter Kolben 24 angeordnet, der im wesentlichen senkrecht zum axialen Durchgang 20 verläuft und mit einer radialen Bohrung 26 versehen ist, deren Querabmessungen etwa denen des Durchganges 20 entsprechen. Bei der in der Zeichnung dargestellten Lage des Kolbens 24 fluchtet dessen Bohrung 26 mit dem Durchgang 20 im Düsenkopf 18, so daß das thermoplastische Material duch den Düsenkopf 18 des Extruders 10 in die nachgeordnete Spritzgießform 28 fließen kann. Andererseits hat eine axiale Verschiebung des als Sperrventil dienenden Kolbens 24 um einen Weg, der mindestens dem Durchmesser der Bohrung 26 entspricht, ein Verschließen des Durchganges 20 zur Folge, so daß kein thermoplastisches Material aus dem Extruder 10 in den, bezogen auf die Darstellung der Fig. 1, rechts von dem Sperrventil 24 befindlichen Bereich gelangen kann.

Der Düsenkopf 18 ist in dem Bereich zwischen Sperrventil 24 und Spritzgießform 28 mit einem zweiten, ebenfalls zylindrischen Speicherraum 30 versehen, in welchem ein Kolben 32 axial hin- und herverschiebbar geführt ist. Letzterer ist über eine Kolbenstange 34 mit einer aus einem hydraulischen Zylinder 36 und einem darin geführten Kolben 37 bestehenden Antriebseinheit verbunden. Der zweite Speicherraum 30 ist über einen Kanalabschnitt 38, der gegenüber dem axialen Durchgang 20 abgewinkelt ist, mit letzterem verbunden. Der Kanalabschnitt 38 mündet bei dem in seiner einen Endlage befindlichen Kolben 32 unmittelbar neben dessen freier Stirnfläche 43 in den Spelcherraum 30, so daß ohne besondere Vorkehrungen der Ausgang des Kanalabschnittes 38 durch den Kolben 32 verschlossen wäre, wenn dieser zum Entleeren des Speicherraumes 30 in Richtung auf seine zweite Endposition verschoben wird. Um dies zu verhindern, ist innerhalb der Wandung des zylindrischen Speicherraumes 30 eine etwa parallel zur Längsachse des Speicherraums 30 und etwa parallel zur Bewegungsrichtung des Kolbens 32 verlaufende nutartige Vertiefung 47 angeordnet, die sich vom Kanalabschnitt 38 bis zum Kanalabschnitt 40 erstreckt, der von der der Kolbenstange 34 abgekehrten Stirnseite des Speicherraumes 30 abgeht. Durch die nutartige Vertiefung 47 wird erreicht, daß unabhängig von der Stellung des Kolbens 32 innerhalb des zweiten Speicherraumes 30 die Verbindung zwischen dem Kanalabschnitt 38 für die Zuführung des thermoplastischen Materials und dem Kanalabschnitt 40 immer aufrechterhalten bleibt und somit auch dann, wenn der Kolben 32 seine andere Endstellung bei vollständig entleertem zweitem Speicherraum 30 einnimmt, Material zum Füllen des Speicherraumes 30 zugeführt werden kann, ohne daß zunächst der Kolben in seine in Fig. 1 der Zeichnung dargestellte Endposition zurückbewegt werden müßte. Insbesondere hat die Anordnung der nutförmigen Vertiefung zur Folge, daß die im Speicherraum 30 befindliche Schmelzepartikel immer in der Reihenfolge in Richtung auf den Kanalabschnitt 40 ausgestoßen werden, in welcher sie in den Speicherraum 30 eingeströmt sind. D. h., daß auch dann, wenn der Kolben 32 nicht zur restlosen Entleerung des Speicherraumes 30 bis in seine zweite Endposition vorbewegt wird, keine unkontrollierten Verweilzeiten irgendwelcher Teile des thermoplastischen Materials im Speicherraum 30 möglich sind.

Der Kanalabschnitt 40 mündet im Düsenteil 41 nach außen, wobei die Anordnung so getroffen ist, daß bei in der üblichen Weise zur Anlage an der Spritzgießform 28 gebrachtem Düsenteil 41 der Kanalabschnitt mit dem Eintrittskanal 42 der Spritzgießform 28 fluchtet.

Die aus Extruder 10 und Düsenkopf 18 einschließlich zweitem Speicherraum 30 und darin geführtem Kolben 32 bestehende Einheit ist gegenüber der Spritzgießform 28 axial bewegbar gelagert und über eine Traverse 44 mit der Kolbenstange 45 eines in einem Hydraulikzylinder 46 geführten Kolbens 47 verbunden. Über den Antrieb 46, 47 wird der Extruder 10 mit den zugehörigen Teilen gegen die Spritzgießform 28 gedrückt. Selbstverständlich können insbesondere zur Erzielung symmetrischer Krafteinleitungen zwei oder mehr hydraulische Antriebe 46, 47 vorgesehen sein.

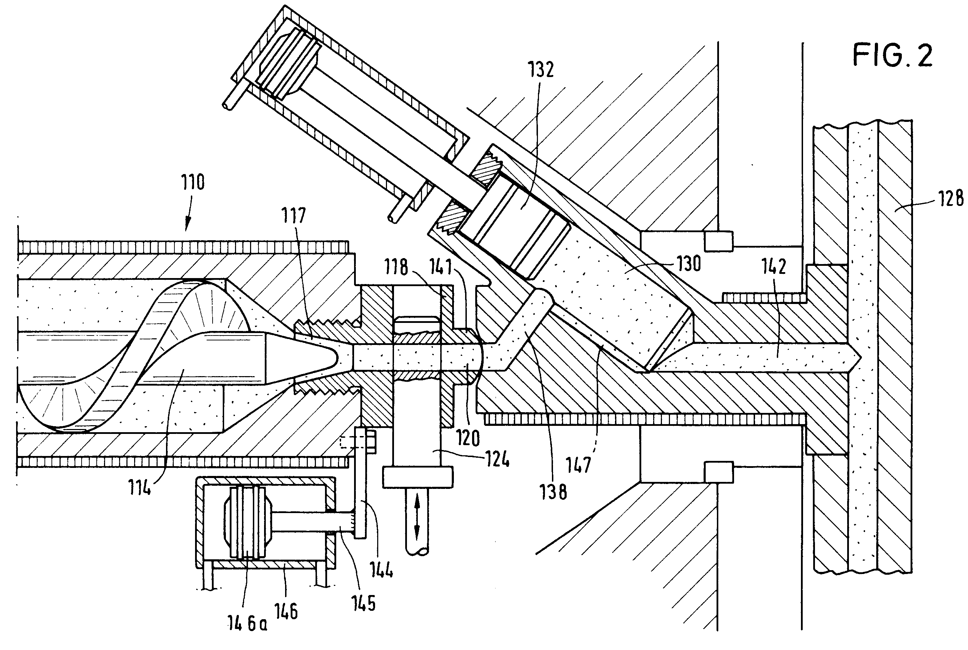

Das Ausführungsbeispiel gemäß Fig. 2 stimmt in wesentlichen Teilen mit dem der Fig. 1 überein, so daß gleiche Teile mit gleichen, in Fig. 2 jedoch jeweils 100 höheren Bezugszeichen versehen sind. Der wesentliche Unterschied zwischen beiden Ausführungsformen besteht darin, daß der zweite Speicherraum 130 nicht, wie im Falle der Fig. 1, im Düsenkopf 18, sondern vielmehr in der Spritzgießform 128 angeordnet ist. Dies gilt auch für den Verbindungskanal 138, dessen Eintrittsöffnung mit dem in Fließrichtung des thermoplastischen Materials hinter dem Absperrkolben 132 befindlichen Abschnitt des Durchgangs 120 fluchtet.

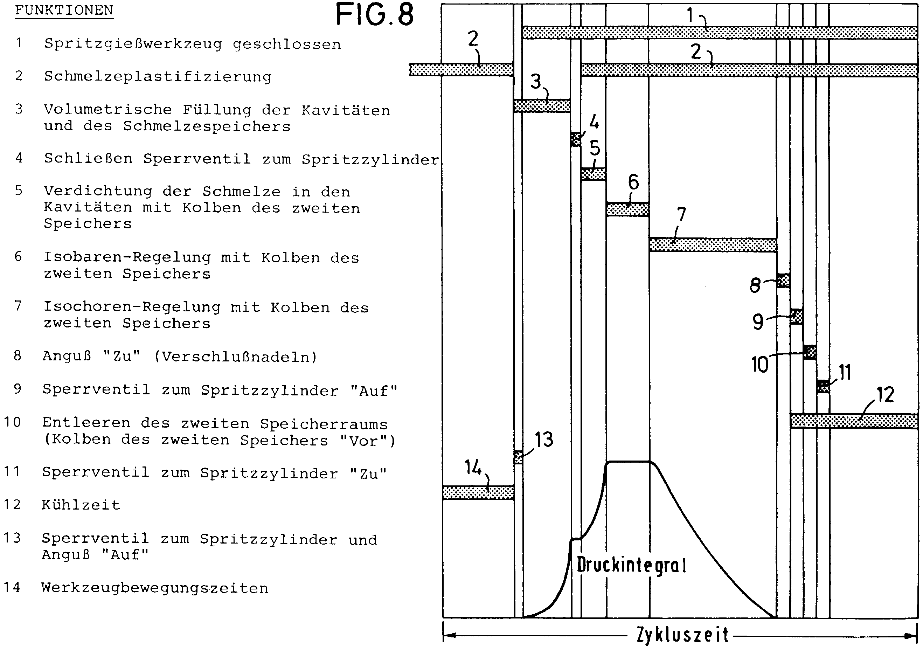

Der im folgenden im Zusammenhang mit Fig. 8 beschriebene zeitliche Ablauf eines Arbeitszyklus gilt sowohl für die Ausführungsform gemäß Fig. 1 als auch für jene gemäß Fig. 2. Es wird angenommen, daß dieser Arbeitszyklus mit dem Schließen der in den Figuren 1 und 2 nicht im Detail dargestellten Spritzgießformen nach Entnahme der im vorangegangenen Arbeitszyklus hergestellten Spritzgießteile beginnt.

Mit dem Schließen der Spritzgießform (Beginn der Funktion 1 in Fig. 8) oder kurz vorher ist die für einen Arbeitszyklus benötigte Menge an thermoplastischem Material in Form einer Schmelze im ersten Speicherraum 17 bzw. 117 bereitgestellt. Dies geschieht in der bereits beschriebenen Weise durch die rotierende Schnecke 14 bzw. 114, die dabei durch das sich im ersten Speicherraum sammelnde Material zurückgeschoben wird. Fig. 8 zeigt, daß diese darin mit 2 gekennzeichnete Funktion sich zeitlich über den größten Teil des Arbeitszyklus erstreckt.

Abgesehen von einer kurzzeitigen Ausnahme, auf die noch einzugehen sein wird, ist während der Plastifizierung gemäß Funktion 2 der Absperrkolben 24 bzw. 124 in seiner Schließstellung.

Nachdem sich eine ausreichende Menge an thermoplastischem Material als Schmelze im ersten Speicherraum 17 bzw. 117 gesammelt hat, was durch die entsprechende Verschiebung der Schnecke 14 bzw. 114 festgestellt werden kann, wird der Rotationsantrieb der Schnecke abgeschaltet. Nach öffnen des Absperrventils 24 bzw. 124 gemäß Funktion 13 der Fig. 8 wird durch Verschieben der Schnecke 14 bzw. 114 aus ihrer bei gefülltem ersten Speicherraum linken Endlage in Richtung des Pfeiles 16 nach rechts die gesammelte Schmelze in Richtung auf die Spritzgießform 28 bzw. 128 zum Füllen derselben und zum gleichzeitigen Füllen des zweiten Speicherraumes 30 bzw. 130 verdrängt, wie dies als Funktion 3 der Fig. 8 dargestellt ist. Bei diesem Vorgang wirkt die dabei normalerweise nicht rotierende Schnecke 14 bzw. 114 als Kolben. Die Figuren 1 und 2 zeigen den Zustand am Ende des Spritzvorganges, also am Ende der Funktion 3 der Fig. 8, wobei der erste Speicherraum entleert und der zweite Speicherraum 30 bzw. 130 sowie die Kavitäten in der Spritzgießform 28 bzw. 128 gefüllt sind. Der dem zweiten Speicherraum zugeordnete Kolben 32 bzw. 132 nimmt dabei seine erste Endposition ein, die dem vollständig gefüllten Speicherraum entspricht.

Spätestens unmittelbar vor Beginn des Spritzvorganges gemäß Funktion 3 der Fig. 8 wird die Zylinder-Kolbenanordnung 46, 47 mit einem Druck beaufschlagt, der die Extruder 10 bzw. 110 und Düsenkopf 18 bzw. 118 aufweisende Einheit mit Düsenteil 26 bzw. 126 gegen die Spritzgießform 28 bzw. 128 drückt, wobei die dazu aufgebrachte Kraft größer ist als die in Gegenrichtung wirkende Kraft, die aus der Verschiebung der Schnecke 14 nach rechts in ihre Position gemäß den Figuren 1 bzw. 2 während des dadurch bewirkten Einspritzens des Materials gemäß Funktion 3 der Fig. 8 resultiert. Auf diese Weise ist gewährleistet, daß das Düsenteil 41 bzw. 141 in Anlage an der Spritzgießform 28 bzw. 128 bleibt.

Nach Beendigung des Spritzvorganges gemäß Funktion 3 der Fig. 8 wird das Absperrventil 24 bzw. 124 gemäß Funktion 4 der Fig. 8 geschlossen. Unmittelbar danach können wieder Schmelzeplastifizierung und Füllen des ersten Speicherraumes gemäß Funktion 2 der Fig. 8 für den folgenden Arbeitszyklus beginnen. Fig. 8 zeigt deutlich, daß dieser Vorgang lediglich für die Zeit unterbrochen war, die für das öffnen des Absperrkolbens 24 bzw. 124 gemäß Funktion 13, das volumetrische Füllen der Kavitäten und des zweiten Speicherraumes 30 bzw. 130 und für das Schließen des Absperrkolbens gemäß Funktion 4 im unmittelbaren Anschluß an Funktion 3 benötigt wird.

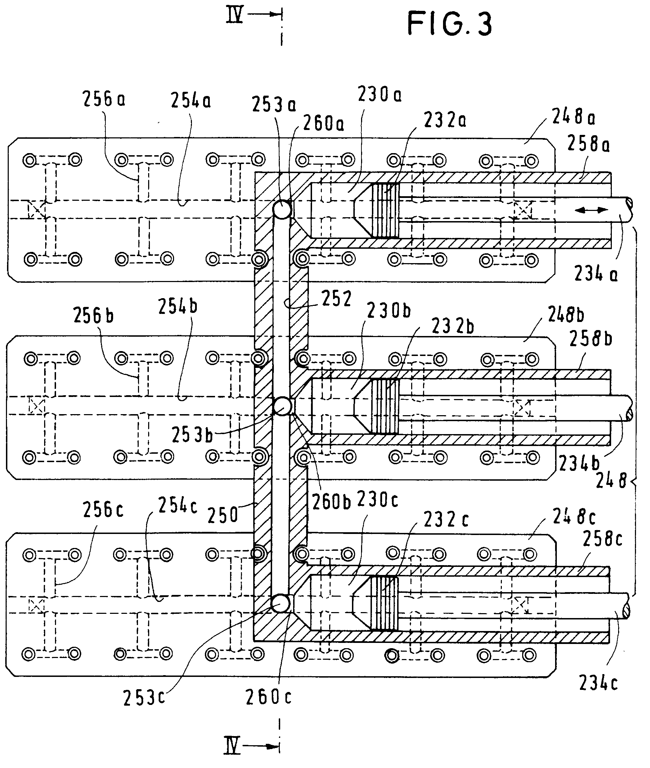

Der wenigstens eine zweite Speicher 30 bzw. 130 kann während des Ablaufens der Funktion 3, also während des volumetrischen Füllens der Kavitäten der Spritzgießform 28 bzw. 128, eine Pufferfunktion ausüben, die dazu benutzt wird, die Geschwindigkeit, mit welcher der thermoplastische Kunststoff in die Kavitäten der Spritzgießform 28 bzw. 128 eingespritzt wird, zu beeinflussen. Dieses Steuern der Geschwindigkeit, mit welcher die Kavitäten gefüllt werden, kann z. B. in der Weise geschehen, daß in einer ersten Phase des Füllvorganges gemäß Funktion 3 der dem zweiten Speicherraum 30 bzw. 130 zugeordnete Kolben 32 bzw. 132, der mit einem eigenen Antrieb 36, 37 versehen ist, zurückbewegt wird, derart, daß während dieser ersten Phase der zweite Speicherraum vollständig gefüllt und somit pro Zeiteinheit ein bestimmter Anteil des aus dem ersten Speicherraum in Richtung auf die Spritzgießform verdrängten thermoplastischen Materials vom zweiten Speicherraum 30 bzw. 130 aufgenommen wird, wobei so vorgegangen werden kann, daß der zweite Speicherraum 30 bzw. 130 bereits vollständig gefüllt ist, bevor der Einspritzvorgang gemäß Fig. 3 beendet ist. Der dem zweiten Speicherraum 30 bzw. 130 zugeordnete Kolben 32, 132 kann dann in seiner Endposition bis zum Abschluß des Füllvorganges gemäß Fig. 3 bleiben. Dies hätte zur Folge, daß nach Beendigung des Füllens des zweiten Speicherraumes das thermoplastische Material mit größerer Geschwindigkeit in die Kavitäten einströmt als dies während der ersten Phase des Einspritzvorganges der Fall war, während welcher zusätzlich auch der zweite Speicherraum 30 bzw. 130 gefüllt wurde. Dabei ist vorausgesetzt, daß das Entleeren des ersten Speicherraumes mit gleichbleibender Geschwindigkeit erfolgt und somit zumindest während des größten Teiles der Funktion 3 eine pro Zeiteinheit konstante Menge an Schmelze aus dem ersten Speicherraum in Richtung auf die Spritzgießform strömt.

Es ist aber auch möglich, den zweiten Speicherraum 30 bzw. 130 während des gesamten Spritzgießvorganges gemäß Funktion 3 zu füllen, wobei dann jedoch beispielsweise in der ersten Phase der Kolben 32 bzw. 132 mit größerer Geschwindigkeit bewegt wird als während der zweiten Phase des Einspritzgießvorganges. Auch dadurch würde die Geschwindigkeit, mit welcher das thermoplastische Material in die Kavitäten einströmt, in dem Sinne beeinflußt werden, daß zu Beginn des Spritzgießvorganges das Material mit geringerer Geschwindigkeit in die Kavitäten strömt. Es ist auch eine Verfahrensweise denkbar, bei welcher in einer ersten Phase des Spritzgießvorganges gemäß Funktion 3 der zweite Speicherraum 30 bzw. 130 vollständig gefüllt wird und während einer daran anschließenden Phase noch während des Füllens der Kavitäten, also noch während des Ablaufens der Funktion 3, teilweise in Richtung auf die Kavitäten entleert wird, wobei die Unterschiede zwischen beiden Phasen bezüglich der Geschwindigkeiten, mit denen das thermoplastische Material in die Kavitäten fließt, noch größer werden.

In jedem Fall muß jedoch so verfahren werden, daß nach Beendigung des Einspritzvorganges gemäß Funktion 3 und nach dem Schließen des Sperrventils gemäß Funktion 4 noch eine bestimmte Menge an thermoplastischem Kunststoff im zweiten Speicherraum 30 bzw. 130 vorhanden ist, die durch den dem zweiten Speicherraum zugeordneten Kolben 32 bzw. 132 beaufschlagt wird, so daß in dem den zweiten Speicherraum und die Kavitäten aufweisenden System ein Druck auch nach dem eigentlichen Einspritzvorgang und nach dem Schließen des Absperrventils 24 bzw. 124 aufrechterhalten bleibt, der dazu dient, eine kleinere Menge an thermoplastischem Material aus dem zweiten Speicherraum bzw. dem daran anschließenden Kanalsystem in die Kavitäten der Spritzgießform 28 bzw. 128 zu drücken, um so durch Schwindung verursachte Volumenänderungen des in den Kavitäten bereits befindlichen und sich abkühlenden thermoplastischen Materials zu kompensieren. Dabei wird so vorgegangen, daß gemäß Funktion 6 der Fig. 8 ein gleichbleibender Druck in der Spritzgießform aufrechterhalten bleibt, wobei, wie bereits erwähnt, kleinere Materialmengen noch zusätzlich in die Kavitäten eingepreßt werden. Nach dieser Isobaren-Regelung gemäß Funktion 6 erfährt der dem zweiten Speicherraum 30 bzw. 130 zugeordnete Kolben 32 bzw. 132 keine merkliche weitere Verschiebung, so daß im Verlauf der weiter erfolgenden Abkühlung des in den Kavitäten befindlichen thermoplastischen Materials der Druck in diesen bis ggf. auf Null abnimmt. Dieser Vorgang entspricht der Funktion 7 der Darstellung in Fig. 8. Danach wird, wenn die Spritzgießform 28 bzw. 128 mit Verschlußnadeln versehen ist, die Eintrittsöffnung zu den einzelnen Kavitäten durch entsprechende Verschiebung dieser Verschlußnadeln verschlossen. Dieser Vorgang entspricht der Funktion 8 des Verfahrensablaufes gemäß Fig. 8.

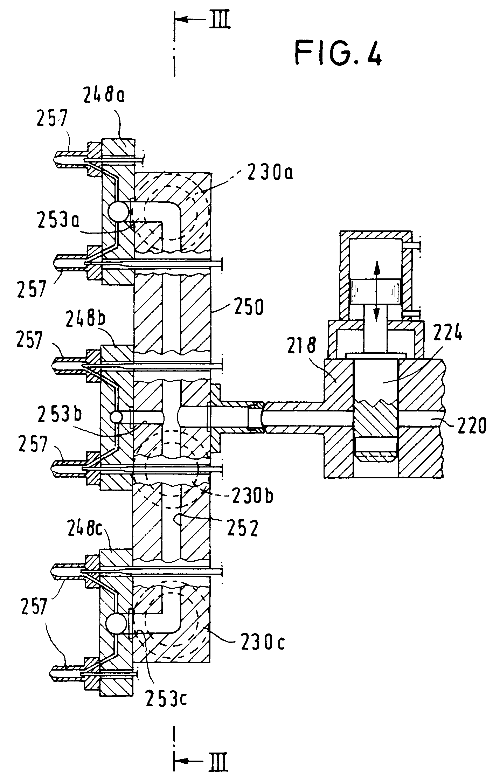

Die im Verlauf der Funktionen 3, 4, 5, 6 und 7 sich im System einstellenden Druckverhältnisse sind bezüglich ihres grundsätzlichen Verlaufs unten in Fig. 8 dargestellt. Während des Einspritzvorganges gemäß Funktion 3 erfolgt ein Anstieg des Druckes auf einen Zwischenwert, der während des Schließens des Sperrventils gemäß Fig. 4 im wesentlichen aufrechterhalten wird, worauf dann eine Druckerhöhung während der Verdichtung der Schmelze in den Kavitäten durch den dem zweiten Speicherraum zugeordneten Kolben gemäß Funktion 5 erfolgt. Der am Ende dieser Funktion vorhandene maximale Druck wird während der Isobaren-Regelung gemäß Funktion 6 im wesentlichen aufrechterhalten. Danach sinkt der Druck im Verlauf der Funktion 7 wieder auf einen Wert nahe dem Ausgangswert ab.

Im Anschluß daran wird das Sperrventil 24 bzw. 124 geöffnet, um so einer Verbindung zwischen zweitem Speicherraum 30 bzw. 130 und erstem Speicherraum 17 bzw. 117 innerhalb des Extruders herzustellen. Dies entspricht der Funktion 9 in Fig. 8. Danach wird der Kolben 32 bzw. 132 des zweiten Speicherraumes in seine zweite Endposition verschoben, wobei der zweite Speicherraum 30 bzw. 130 vollständig in Richtung auf den ersten Speicherraum entleert wird. Auf diese Weise wird sichergestellt, daß beim folgenden Arbeitszyklus ein definiertes Volumen an thermoplastischer Schmelze aus dem ersten Speicherraum während des Einspritzens gemäß Funktion 3 in Richtung auf die Spritzgießform bewegt wird. Diese vollständige Entleerung des zweiten Speicherraumes 30 bzw. 130 soll verhindern, daß in Abhängigkeit vom Ausmaß der Schwindung während der Isobaren-Regelung gemäß Funktion 6 der Kolben 32 bzw. 132 am Ende der Funktion 8 eine nicht vorherbestimmbare Position einnimmmt und somit auch die im zweiten Speicherraum 30 bzw. 130 verbleibende Restmenge an Schmelze von Arbeitszyklus zu Arbeitszyklus schwankt.

Nach dem vollständigen Entleeren des zusätzlichen Speicherraumes 30 bzw. 130 gemäß Funktion 10 der Fig. 8 wird im nächsten Verfahrensschritt gemäß Funktion 11 das Sperrventil 24 bzw. 124 wieder geschlossen um zu verhindern, daß aufgrund des im Extruder 10 bzw. 110 herrschenden Druckes thermoplastisches Material in Richtung auf die Spritzgießform 28 bzw. 128 strömen kann. Dieser im Extruder 10 bzw. 110 herrschende Druck macht es auch erforderlich, daß der während des Entleerens des zweiten Speicherraumes 30 bzw. 130 oder durch die zugeordneten Kolben 32 bzw. 132 ausgeübte Druck größer ist als der Druck im Extruder 10 bzw. 110, da im anderen Fall es nicht möglich wäre, daß im Speicherraum 30 bzw. 130 befindliche Restmaterial in Richtung auf den Extruder 10 bzw. 110 zu verdrängen.

Mit dem Verschließen der Kavitäten durch die jeweils zugeordneten Verschlußnadeln gemäß Funktion 8 beginnt die restliche Kühlzeit gemäß Funktion 12 der Fig. 8, an deren Ende das Werkzeug gemäß Funktion 14 zur Entnahme der hergestellten Artikel geöffnet und danach wieder zur Vorbereitung auf den Einspritzvorgang gemäß Funktion 3 des folgenden Arbeitszyklus geschlossen wird. Dazu ist es dann lediglich nach dem Schließen des Spritzgießwerkzeuges erforderlich, das Sperrventil 24 bzw. 124 zu öffnen, womit dann der nächste Arbeitszyklus beginnt.

Bei beiden vorstehend beschriebenen Ausführungsformen ist es erforderlich, die durch die Zylinder-Kolben-Anordnung 46, 47 aufgebrachte Kraft zumindest bis zum Ende der Funktion 11 gemäß Fig. 8 auf einem bestimmten Niveau aufrechtzuerhalten, um zu verhindern, daß bei der Entleerung des zweiten Speicherraumes 30 bzw. 130 thermoplastisches Material aus dem Düsenkopf austritt.

Da aufgrund des Vorhandenseins der nutartigen Vertiefung 47 bzw. 147 eine Gewähr dafür gegeben ist, daß in jedem Fall die Teile des thermoplastischen Materials in der Reihenfolge aus dem zweiten Speicherraum 30 bzw. 130 ausgestoßen werden, in welcher sie in den Speicherraum eingeströmt sind, kann auf die restliche Entleerung des zweiten Speicherraumes gemäß Funktion 10 der Fig. 8 dann verzichtet werden, wenn das Füllen des zweiten Speicherraumes 30 bzw. 130 gemäß Funktion 3 der Fig. 8 nach einem bestimmten, vorgegebenen Programm erfolgt derart, daß der Kolben 32 bzw. 132 zum Füllen des zweiten Speicherraumes über eine bestimmte Wegstrecke oder aber in eine bestimmte, festgelegte Endposition am Ende des Füllvorganges bewegt wird. Letzteres wird insbesondere dann möglich sein, wenn auch das Nachdrücken durch den Kolben 32 bzw. 132 zur Herbeiführung der Isobaren-Regelung gemäß Funktion 6 der Fig. 8 nach einem bestimmten Programm erfolgt. Dies ist in der Praxis jedenfalls dann möglich, wenn die Eigenschaften des verwendeten thermoplastischen Kunststoffes über längere Zeiträume nur wenig schwanken und somit das Ausmaß der Verdichtung der Schmelze in den Kavitäten gemäß Funktion 5 und das Ausmaß des Schwindens des in den Kavitäten befindlichen thermoplastischen Materials während des Abkühlens mit ausreichender Genauigkeit vorherbestimmt werden können. In diesem Fall können das Volumen des aus dem zweiten Speicherraum 30 bzw. 132 in Richtung auf die Kavitäten zu verdrängenden Materials und damit der vom zugeordneten Kolben 32 bzw. 132 in Abhängigkeit von der Zeit auszuübende Hub durch ein Programm festgelegt werden, nach welchem während der Funktionen 5 und 6 und ggf. 7 der Kolben 32 bzw. 132 zu verschieben ist.

Beim Ausführungsbeispiel gemäß Fig. 2 ist der zweite Speicherraum 130 zwar innerhalb des Spritzgußwerkzeuges angeordnet, jedoch in unmittelbarem Anschluß an den Düsenkopf 118 des Extruders 110. Demgegenüber weist das Ausführungsbeispiel gemäß den Figuren 3 und 4, in welchen die dem Ausführungsbeispiel gemäß Fig. 2 entsprechenden Teile mit gleichen, jedoch um 100 höheren Bezugszeichen versehen sind, zwei zweite Speicherräume 230a, 230c auf, die an den beiden äußeren Abschnitten 248a bzw. 248c des in drei Abschnitte 248a, 248b, 248c unterteilten Heißkanal-Bereichs 248 angeordnet sind.

Insbesondere Fig. 4 läßt erkennen, daß der Düsenkopf 218, der ebenfalls mit einem Absperrventil 224 in Form eines längsverschiebbaren Kolbens versehen ist, mit einer die Heißkanal-Abschnitte 248a, 248b, 248c verbindenden Traverse zusammenwirkt, die mit einem Verbindungskanal 252 versehen ist, von dem die Zuführungskanäle 253a, 253b und 253c zu den einzelnen Heißkanal-Abschnitten 248a, 248b, 248c abgehen. Innerhalb jedes Heißkanal-Abschnittes ist ein längsverlaufender Verteilerkanal 254a, 254b, 254c vorhanden. Von diesen Verteilerkanälen 254a, 254b, 254c erfolgt die Verteilung des thermoplastischen Materials auf die beidseitig jeweils paarweise über Abzweigkanäle 256a, 256b, 256c angeschlossenen Kavitäten, wobei jeder Kavität das thermoplatische Material über ein Düsenteil 257 zugeführt wird. Die die Kavitäten aufweisenden Teile der Form sind in den Fig. 3 und 4 nicht dargestellt.

Im Bereich der Heißkanal-Abschnitte 248a, 248c ist die Traverse 250 mit jeweils einem parallel zum jeweiligen Verteilerkanal 254a bzw. 254c verlaufenden Fortsatz 258a bzw. 258c für die Aufnahme der zweiten Speicherräume 230a, 230c versehen. Der kurze Kanalabschnitt 260a, 260c, der die Verbindung zwischen jeweiligem zweiten Speicherraum 230a, 230c und dem Verbindungskanal 252 herstellt, zweigt von letzterem horizontal dort ab, wo die Zuführungskanäle 253a, 253c von Verbindungskanal 252 nach unten in Richtung auf die Heißkanal-Abschnitte 248a, 248c abzweigen. Jedem der beiden zweiten Speicherräume 230a, 230c ist ein Kolben 232a, 232c zugeordnet, der über eine Kolbenstange 234a, 234c mit einem in der Zeichnung nicht dargestellten Antrieb versehen ist. Beiden Kolben 232a, 232c kann ein gemeinsamer Antrieb zugeordnet sein.

Der Arbeitszyklus des Ausführungsbeispiels gemäß den Figuren 3 und 4 läuft in der bereits im Zusammenhang mit Fig. 8 beschriebenen Weise ab. D. h., daß nach dem Schließen des Absperrventils 224 gemäß Funktion 4 der Fig. 8 die Druckbeaufschlagung der Schmelze aus dem thermoplastischen Material in den Kanälen des Heißkanal-Bereiches 248 sowie in den Kavitäten durch die beiden Kolben 232a, 232c erfolgt, wobei der durch diese Kolben ausgeübte Druck über den Verbindungskanal 252 auch auf die Kavitäten im Heißkanal-Abschnitt 248b übertragen wird. Auch hier gilt demzufolge, daß nach dem Schließen des Absperrventils 224 gemäß Funktion 4 der Fig. 8 der in den Figuren 3 und 4 nicht dargestellte Extruder wieder mit dem Plastifizieren des Kunststoffes und dem Füllen des ersten Speicherraumes beginnen kann.

Der bei der Ausführungsform gemäß den Figuren 3 und 4 durch die Anordnung der zweiten Speicherräume 232a, 232c am Heißkanal-Bereich 248 in unmittelbare Nähe der Kavitäten erzielbare Vorteil, den für das Verdichten der in den Kavitäten befindlichen Schmelze erforderlichen Druck in unmittelbarer Nähe dieser Kavitäten entstehen zu lassen, so daß aufgrund der kurzen Wege der entsprechende Druck in den Kavitäten, also dort, wo die herzustellenden Artikel gebildet werden, schnell wirksam wird, ist insbesondere dann von Bedeutung, wenn durch gezielte Volumenänderung des zweiten Speicherraumes oder der zweiten Speicherräume mittels Verschieben des jeweils zugeordneten Verdrängerkolbens 234a, 234c während des Einspritzvorganges der Schmelzefluß und damit insbesondere die Geschwindigkeit der Schmelze zu den Kavitäten in Abhängigkeit von der Zeit oder auch vom Druck oder von anderen Parametern geregelt oder gesteuert werden sollen.

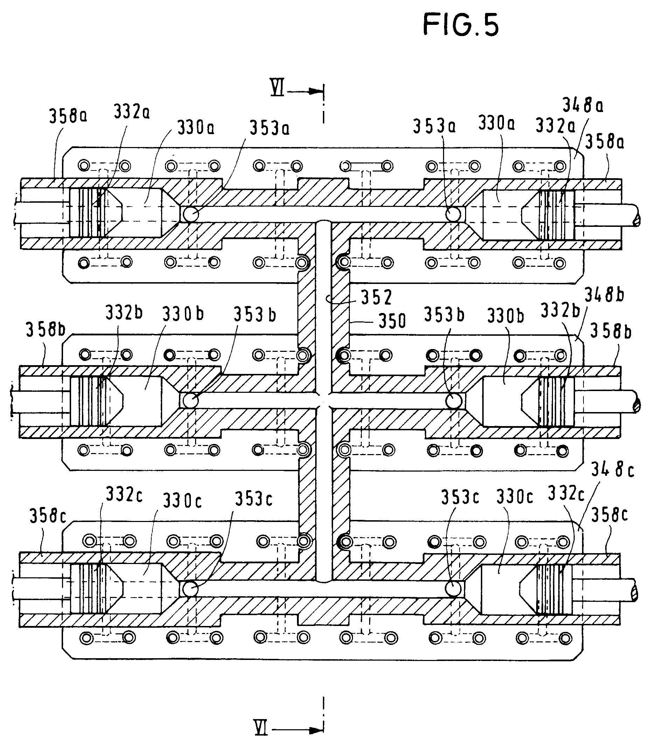

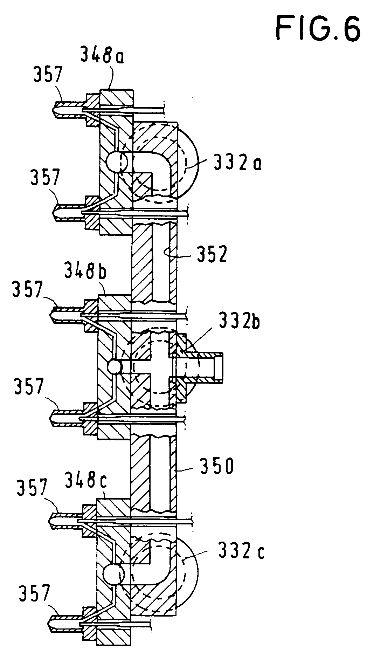

Die Ausführungsform gemäß den Fig. 5 und 6 geht in dieser Hinsicht noch weiter. Ihr Grundaufbau ist dem der Ausführungsform gemäß den Figuren 3 und 4 sehr ähnlich, so daß gleiche Teile auch mit gleichen, jeweils um 100 höheren Bezugszeichen versehen sind. Der wesentliche Unterschied besteht darin, daß bei der Ausführungsform gemäß den Figuren 5 und 6 alle drei Heißkanal-Abschnitte 348a, 348b, 348c mit jeweils zwei zweiten Speicherräumen 330a, 330b, 330c versehen sind, von denen in jedem Heißkanal-Abschnitt jeweils ein Speicherraum zu einer Seite der Traverse 350 bzw. des darin verlaufenden Verteilerkanals 352 angeordnet ist. Dabei ist in der üblichen Weise jedem zweiten Speicherraum ein Verdrängerkolben 332a, 332b, 332c zugeordnet, der jeweils über eine Kolbenstange mit einem nicht dargestellten Antrieb versehen ist. Fig. 5 läßt erkennen, daß es zweckmäßig sein kann, die Kolbenstangen aller rechts von der Traverse 350 und die Kolbenstangen aller links von der Traverse 350 befindlicher zweiten Speicherräume mit einem gemeinsamen Antrieb zu versehen. Auch hier ist entsprechend der Ausführungsform gemäß den Figuren 3 und 4 die Traverse 350, hier allerdings beidseitig, mit einem Fortsatz 358a, 358b, 358c versehen, der jeweils einen zweiten Speicherraum mit zugehörigem Verdrängerkolben aufnimmt. Ferner sind hier die Verteilerkanäle der Heißkanal-Abschnitte 348a, 348b, 348c jeweils über zwei Zufuhrkanäle 353a, 353b, 353c mit dem Verbindungskanal 352 in der Traverse 350 verbunden.

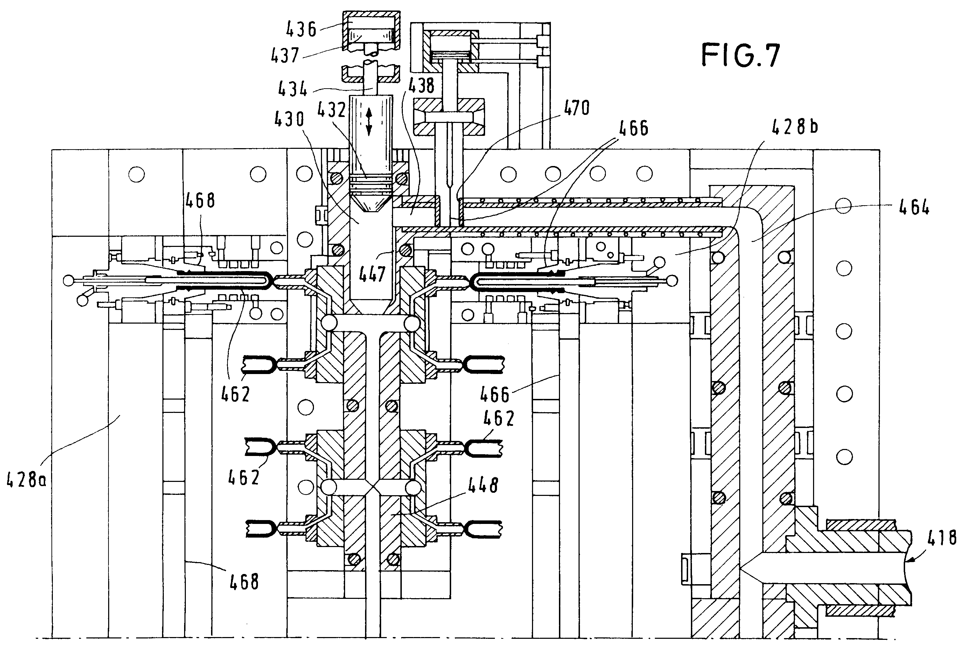

Fig. 7, in welcher der Ausführungsform gemäß den Figuren 5 und 6 entsprechende Teile mit gleichen, jedoch um jeweils 100 höheren Bezugszeichen versehen sind, zeigt eine Ausführungsform, bei welcher dem Heißkanal-Bereich 448 zwei Kavitäten enthaltende Spritzgießwerkzeug-Teile 428a, 428b zugeordnet sind. Dabei ist der Heißkanal-Bereich 448 mit einem zweiten Speicherraum 430 versehen, dem ein Kolben 432 zugeordnet ist, der in der üblichen Weise durch einen besonderen Antrieb 436, 437 verschoben werden kann.

Die Zuführung der Schmelze aus thermoplastischem Kunststoff zum Heißkanal-Bereich 448 erfolgt über eine Zuleitung 464 am Spritzgießwerkzeug-Teil 428b, welches stationär angeordnet ist und mit dem Düsenkopf 418 des in Fig. 7 nicht dargestellten Extruders zusammenwirkt. Der Heißkanal-Bereich 448 ist gegenüber dem stationären Spritzgießwerkzeug-Teil 428b verschiebbar angeordnet, wobei die Trennfläche zwischen beiden Teilen entlang der Linie 466 verläuft. Entsprechend ist das Spritzgießwerkzeug-Teil 428a gegenüber dem Heißkanal-Bereich 484 verschiebbar angeordnet, wobei das Teil 428a beim Öffnen und Schließen um eine Wegstrecke bewegt wird, die etwa doppelt so groß ist wie die Wegstrecke, um welche der Heißkanal-Bereich 432 gegenüber dem Werkzeugteil 428b verschiebbar ist. Die Trennfläche zwischen dem Heißkanal-Bereich 448 und dem Werkzeug-Teil 428a verläuft entlang der Linie 468.

In der Trennfläche 466 ist ein Ventil 470 angeordnet, welches dazu dient, die Zuleitung 464 zu schließen, bevor das Spritzgießwerkzeug durch Auseinanderbewegen der Teile 428a und 448 geöffnet wird. Das Ventil selbst ist auch entlang der Linie 466 teilbar, so daß die Teile seines Absperrkörpers auch bei geöffnetem Spritzgießwerkzeug die zu beiden Seiten des Ventils befindlichen Abschnitte der Zuleitung 464 verschlossen halten.

Der Arbeitszyklus läuft bei dieser Ausführungsform ebenfalls in der bereits im Zusammenhang mit Fig. 8 beschriebenen Weise ab, wobei der Kolben 432 im zweiten Speicherraum noch insoweit eine Zusatzfunktion erfüllt, als er am Ende der Funktion 12 die Dekompression innerhalb des Werkzeuges durch entsprechende Bewegung bewirkt, da das Werkzeug gemäß Fig. 7 nadellos arbeitet. D. h., daß hier die Funktion 8 des Arbeitsablaufs der Fig. 8 entfällt bzw. durch die Dekompression ersetzt wird.

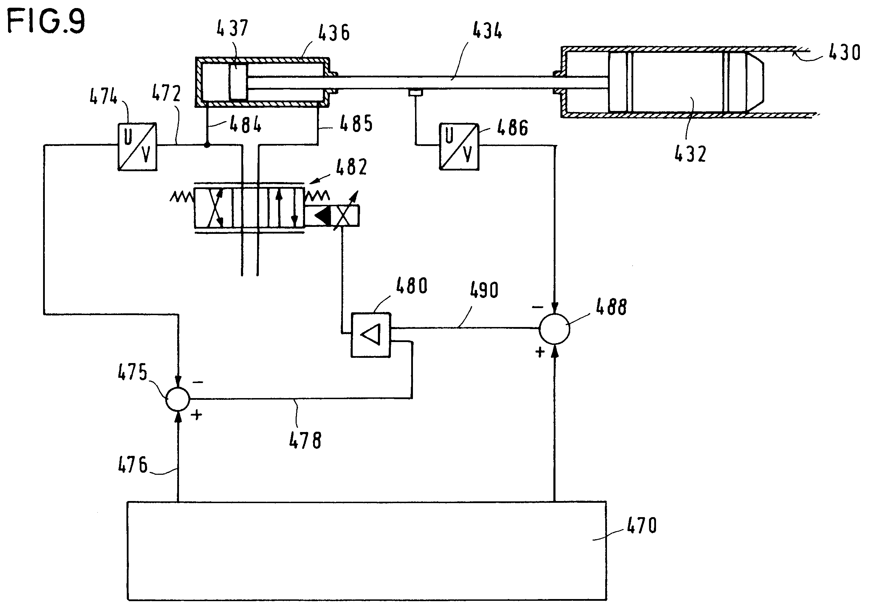

Die Bewegungen des Kolbens der Antriebseinheit für den Kolben des wenigstens einen zweiten Speicherraumes werden vorteilhaft in Abhängigkeit von Druck- und/oder Geschwindigkeit und/oder Weg geregelt. Ein einen derartigen Regelkreis betreffendes Blockschaltbild ist in Fig. 9 dargestellt, wobei auf das Ausführungsbeispiel gemäß Fig. 7 bezug genommen wird. Die Sollwerte für Druck und/oder Temperatur und/oder Weg vorzugsweise in Abhängigkeit von der Zeit werden von einem Prozeßrechner 470 geliefert. Die Ist-Werte werden vom Zylinder 436 bzw. der Kolbenstange 434 der Antriebseinheit für den Kolben 432 des zweiten Speicherraumes 430 abgenommen. Die den Druck betreffenden Werte werden über eine Leitung 472 einem Wandler 474 zugeführt, von welchem ein dem aufgenommenen Druck entsprechender Wert einer Vergleichseinheit 475 zugeführt wird. In letzterer wird dieser dem Ist-Zustand entsprechende Wert mit dem über die Leitung 476 von Prozeßrechner 470 zugeführtem Soll-Wert für den Druck verglichen. Bei einer Abweichung zwischen beiden Werten wird zumindest dann, wenn das Ausmaß dieser Abweichung eine bestimmte Größe überschreitet, über die Leitung 478 ein der Abweichung entsprechendes Signal an den Verstärker 480 gegeben, in welchem ein Stellsignal gebildet wird, welches direkt das Servoventil 482 ansteuert. Letzteres bewirkt über die Leitungen 484, 485 eine Änderung der Betriebsverhältnisse der Antriebseinheit 436, 437, die zumindeset zu einer Annäherung an den Soll-Wert führt.

In entsprechender Weise wird bezüglich der Einhaltung der Soll-Geschwindigkeit bzw. des Soll-Weges verfahren. Der von der Kolbenstange 434 abgenommene Ist-Wert bezüglich Weg bzw. Geschwindigkeit wird einem Wandler 486 zugeführt. Der dem Ist-Zustand entsprechende Wert gelangt von dort an eine Vergleichseinheit 488, die vom Prozeßrechner 470 den zugehörigen Soll-Wert erhält. Bei Aweichung des Ist-Wertes vom Soll-Wert erfolgt über die Leitung 490 eine entsprechende Signalabgabe an den Verstärker 480 mit der Folge, daß in der bereits beschriebenen Weise über das Servoventil 482 eine entsprechende Beeinflussung der Antriebseinheit 436, 437 erfolgt, durch die zumindest eine Annäherung an den Soll-Wert bewirkt wird.

Die vorstehend erläuterten und in der Zeichnung dargestellten Ausführungsformen dienen zur Herstellung von Vorformlingen, aus denen in einem weiteren Arbeitsgang unter Anwendung von innerem Überdruck Hohlkörper, insbesondere Behälter für Flüssigkeiten, hergestellt werden. An für derartige Zwecke verwendete Vorformlinge werden hohe Qualitätsanforderungen insbesondere dann gestellt, wenn die darin abzufüllende Flüssigkeit unter Überdruck steht. Die Lehre gemäß der Erfindung kann aber auch bei der Herstellung von Artikeln, die anderen Zwecken dienen, mit Vorteil angewendet werden.

## Patentansprüche

1. Verfahren zum Herstellen von Gegenständen aus thermoplastischem Kunststoff durch Spritzgießen unter Verwendung eines mit einer Schnecke versehenen Extruders mit Düsenkopf und einer mit wenigstens einer Kavität versehenen Spritzgießform, bei welchem zunächst das in einem ersten Speicherraum gespeicherte Material in Richtung auf die Spritzgießform zum Füllen derselben bewegt wird und nach dem Füllen der Spritzgießform auf das in letzterer befindliche thermoplastische Material ein Nachdruck zur Kompensation von bei der Abkühlung auftretenden Materialschwindungen aufrechterhalten bleibt unter Verwendung wenigstens eines zweiten Speicherraums, aus welchem ein Kolben thermoplastischen Kunststoff in Richtung auf die wenigstens eine Kavität der Spritzgießform zu verdrängen sucht, während die Verbindung zwischen Extruder und Spritzgießform unterbrochen ist, dadurch gekennzeichnet, daß das Volumen des wenigstens einen zweiten Speicherraums während des Entleerens des ersten Speicherraums durch entsprechendes Verschieben des den wenigstens einen zweiten Speicherraum zugeordneten Kolbens verändert werden kann, um das Füllen der Spritzgießform mit einer Geschwindigkeit ablaufen zu lassen, die unabhängig ist von der Geschwindigkeit, mit welcher der erste Speicherraum entleert wird.

2. Verfahren nach Anspruch 1, dadurch gekennzeichnet, daß das Volumen des wenigstens einen zweiten Speicherraumes zur Verlangsamung des Füllens der wenigstens einen Kavität in der ersten Phase des Einspritzvorganges während dieser ersten Phase eine Vergrößerung erfährt.

3. Verfahren nach Anspruch 1, dadurch gekennzeichnet, daß die Volumenänderungen des wenigstens einen zweiten Speicherraumes während der Entleerung des ersten Speicherraums in Abhängigkeit von einem bestimmten Programm durchgeführt werden.

4. Verfahren nach Anspruch 1, dadurch gekennzeichnet, daß die Volumenänderungen des wenigstens einen zweiten Speicherraumes während der Entleerung des ersten Speicherraumes in Abhängigkeit von der Position des den ersten Speicherraum entleerenden Kolbens durchgeführt werden.

5. Verfahren nach Anspruch 1, dadurch gekennzeichnet, daß die Volumenänderungen des wenigstens einen zweiten Speicherraumes während der Entleerung des ersten Speicherraumes in Abhängigkeit vom Druck durchgeführt werden, welcher in der Spritzgießform vorhanden ist.

6. Verfahren nach Anspruch 1, dadurch gekennzeichnet, daß die Volumenänderungen des wenigstens einen zweiten Speicherraumes während der Nachdruckphase in Abhängigkeit von einem bestimmten Programm durchgeführt werden.

7. Verfahren insbesondere nach Anspruch 1, dadurch gekennzeichnet, daß der wenigstens eine zweite Speicherraum im Düsenkopf des Extruders angeordnet ist.

8. Verfahren insbesondere nach Anspruch 1, dadurch gekennzeichnet, daß der wenigstens eine zweite Speicherraum im Heißkanal-Bereich der Spritzgießform angeordnet ist.

9. Verfahren nach Anspruch 8, dadurch gekennzeichnet, daß wenigstens zwei zweite Speicherräume im Heißkanal-Bereich der Spritzgießform vorgesehen sind.

10. Verfahren insbesondere nach Anspruch 8, dadurch gekennzeichnet, daß mehrere Kavitäten der Spritzgießform von einem gemeinsamen zweiten Speicherraum beeinflußt werden.

11. Verfahren nach Anspruch 8, dadurch gekennzeichnet, daß jeder Kavität der Spritzgießform ein zweiter Speicherraum zugeordnet ist.

12. Verfahren insbesondere nach Anspruch 8, dadurch gekennzeichnet, daß die Dekompression innerhalb der Spritzgießform vor dem Öffnen derselben durch entsprechende Volumenvergrößerung des wenigstens einen zweiten Speicherraumes bewirkt wird.

13. Verfahren nach Anspruch 1, dadurch gekennzeichnet, daß nach Beendigung der Nachdruckphase eine Verbindung zwischen zweitem Speicherraum und erstem Speicherraum hergestellt wird und das in dem wenigstens einen zweiten Speicherraum noch befindliche Material zur Entleerung dieses zweiten Speicherraumes durch den zugeordneten Kolben in Richtung auf den ersten Speicherraum verdrängt wird.

14. Verfahren nach Anspruch 13, dadurch gekennzeichnet, daß sämtliche zweiten Speicherräume gleichzeitig entleert werden.

15. Verfahren nach Anspruch 11, dadurch gekennzeichnet, daß die Kolben in den zweiten Speicherräumen am Ende der Nachdruckphase die jeweils zugehörige Kavität verschließen.

16. Spritzgießvorrichtung mit einem Extruder (10) und einem ersten Speicherraum (17) für thermoplastischen Kunststoff, der durch ein verschiebbares, als Kolben wirkendes Mittel (14) zumindest teilweise entleert werden kann, und mit einem die Verbindung zwischen erstem Speicherraum (17) und einer mit wenigstens einer Kavität versehenen Spritzgießform (28) herstellenden Düsenkopf (18) mit Düsenteil (14), wobei ein mit Extruder (10) und der wenigstens einen Kavität der Spritzgießform (28) verbindbarer zweiter Speicherraum (30) und zwischen Extruder (10) und zweitem Speicherraum (30) ein Absperrelement (24) vorgesehen sind und dem mindestens einen zweiten Speicherraum (30) ein Kolben (32) zugeordnet ist, mittels dessen das Volumen des wenigstens einen zweiten Speicherraumes (30) verändert werden kann, dadurch gekennzeichnet, daß der Kolben (32) des wenigstens einen zweiten Speicherraums (30) mit einem Antrieb (36, 37) versehen ist, über welchen insbesondere zur Steuerung der Geschwindigkeit, mit welcher die wenigstens eine Kavität während des Entleerens des ersten Speicherraumes gefüllt wird, das Volumen des wenigstens einen zweiten Speicherraumes (30) einstellbar ist.

17. Vorrichtung nach Anspruch 16, dadurch gekennzeichnet, daß der wenigstens eine zweite Speicherraum (230a, 230c; 330a, 330b, 330c; 430) am Spritzgießwerkzeug angeordnet ist.

18. Vorrichtung nach Anspruch 17, dadurch gekennzeichnet, daß der wenigstens eine zweite Speicherraum (230a, 230c; 330a, 330b, 330c; 430) am Heißkanal-Bereich (248; 348; 448) des Spritzgießwerkzeuges angeordnet ist.

19. Vorrichtung nach Anspruch 17, dadurch gekennzeichnet, daß der wenigstens eine zweite Speicherraum innerhalb des Heißkanal-Bereiches des Spritzgießwerkzeuges angeordnet ist.

20. Vorrichtung insbesondere nach Anspruch 16, dadurch gekennzeichnet, daß der wenigstens eine zweite Speicherraum (30) im Düsenkopf (18) des Extruders (10) angeordnet ist.

21. Vorrichtung nach Anspruch 16, dadurch gekennzeichnet, daß der wenigstens eine zweite Speicherraum (30; 130) Teil eines Verbindungskanals zwischen Extruder (10; 110) und wenigstens einer Kavität der Spritzgießform (28; 128) ist.

22. Vorrichtung insbesondere nach einem der Ansprüche 16 - 19, dadurch gekennzeichnet, daß der Kanal (38; 138; 438), durch welchen die Schmelze aus thermoplastischen Material in den zweiten Speicherraum (30; 130; 430) geführt wird, innerhalb des von dem zugeordneten Kolben (32; 132; 432) ausgeführten Hubs in den zweiten Speicherraum (30; 130; 430) mündet und in der Wandung des zweiten Speicherraumes (30; 130; 430) eine längsverlaufende nutartige Vertiefung (47; 147; 447) angebracht ist, die in jeder Lage des Kolbens (32; 132; 432) eine Verbindung zwischen der Mündung des Kanals (38; 138; 438) in den zweiten Speicherraum (30; 130; 430) und dem freien Ende des Kolbens (32; 132; 432) herstellt.

23. Vorrichtung nach einem der Ansprüche 16 - 20, dadurch gekennzeichnet, daß jeder Kavität der Spritzgießform ein zweiter Speicherraum zugeordnet ist.

24. Vorrichtung nach Anspruch 23, dadurch gekennzeichnet, daß der Kolben des jeweiligen zweiten Speicherraumes als Ringkolben ausgebildet ist, dessen innerer Durchgang Teil des Zufuhrkanales für das thermoplastische Material ist.

25. Vorrichtung nach Anspruch 24, dadurch gekennzeichnet, daß sämtliche Ringkolben einer Gruppe von Formnestern von einer gemeinsamen Platte getragen sind, die mit einem gemeinsamen Antrieb für alle Kolben versehen ist.

26. Vorrichtung insbesondere nach einem der Ansprüche 16 - 25, dadurch gekennzeichnet, daß die Stellung des dem jeweiligen zweiten Speicherraum zugeordneten Kolbens am Ende der Nachdrückphase erfaßt und die Wegstrecke, um welche der Kolben in einem der darauffolgenden Arbeitsgänge zum Zwecke der Vergrößerung des Volumens des zweiten Speicherraumes bewegt wird, gewählt wird in Abhängigkeit von der Endposition des Kolbens am Ende des Nachdrückvorganges.
